# EUROPÄISCHE PATENTANMELDUNG

(11) **EP 0 941 680 A1**
(43) Veröffentlichungstag der Anmeldung: **15.09.1999**
(21) Anmeldenummer: 98810212.5
(22) Anmeldetag: 13.03.1998
(51) Int. Cl.: A47F 5/08

(54) **Tragstangenanordnung für Handels- und Dienstleistungseinrichtungen**

(71) Anmelder: Fehlbaum & Co., CH-4132 Muttenz (CH)
(72) Erfinder: Walter, Herbert, 79379 Müllheim (DE); Uecker, Manfred, 79618 Rheinfelden (DE)
(74) Vertreter: Ullrich, Gerhard, Dr.

(57) **Zusammenfassung**

Die Tragstangenanordnung besteht aus einer Steckhülse (**2**) und einer Trägerstange (**1**), welche in die Steckhülse (**2**) mit wenigen Handgriffen einsteckbar bzw. aus dieser ausklinkbar ist. Die Steckhülse (**2**) ist dazu bestimmt, vorrangig in einem Wanddurchbruch eingesetzt zu werden. Am Steckende (**10**) der Trägerstange (**1**) ist eine Hakenkontur vorhanden, welche im Zusammenspiel mit einem Federelement (**5**) oder einem internen Absatz die Arretierung der eingesteckten Trägerstange (**1**) bewirkt. Die Trägerstange (**1**) selbst dient zum Anhängen von Dingen, oder es wird an einer bzw. mehreren Trägerstangen (**1**) ein Warenträger gehaltert. Die Tragstangenanordnung erweitert insbesondere die individuellen und gediegenen Gestaltungsmöglichkeiten im Laden- und Messebau.

## Beschreibung

### Anwendungsgebiet der Erfindung

Die Erfindung betrifft eine Tragstangenanordnung mit einer in einer Rückwand, einem Regalbauelement oder einer anderen Tragstruktur eingesetzten Steckaufnahme und darin arretierend einsteckbarer Trägerstange. Typischerweise werden solche Tragstangenanordnungen in Ladengeschäften und auf Ausstellungen zur Präsentation von Waren oder Dienstleistungen verwendet. Die Tragstangenanordnungen sind aber auch zum Befestigen von Dekorations- oder Abschirmelementen sowie als Halterung für Informationsträger einsetzbar. Man kann die zu halternden Dinge, wie Bekleidungssachen, Accessoires und Warenpackungen unmittelbar an die Trägerstange anhängen oder aber die Trägerstange bildet die Konsole für den direkten Träger, z.B. eine an einer oder mehreren Trägerstangen angebrachte Warenablage. So können solche Trägerstangen beispielsweise ein- oder mehrarmige Kleiderstangen oder -bügel sein. Die Trägerstangen können Tablare stützen, Informations- oder Dekorationselemente haltern und z.B. auch Vorhänge halten.

### Stand der Technik

Besonders für Laden- und Messestandseinrichtungen ist heutzutage eine grosse Variabilität, ästhetische Gestaltung aber auch kostengünstige Lösung bei Tragstangenanordnungen wünschenswert. Eine derartige Tragstangenanordnung wird in der WO 96/18329 offenbart. Die Steckhülsen werden einzeln oder systematisch verteilt in eine Rückwand einsetzt.

Die Tragstangenanordnung besteht aus einer Steckaufnahme und einer Trägerstange, welche in die Steckaufnahme mit wenigen Handgriffen einsteckbar bzw. aus dieser ausklinkbar ist. Es ist möglich, die Steckaufnahme auf einer Präsentationswand vor- oder rückseitig aufzusetzen oder in eine Wand einzusetzen. Ebenso ist vorgesehen, die Steckaufnahme in oder auf ein Regalbauelement zu setzen. Die Trägerstange besitzt eine Steckplatte und ein daran angesetztes Rohrstück. Im angewinkelten Zustand kann die Steckplatte durch die fensterartige Einstecköffnung in das Gehäuse eingeführt und nach einer geringfügigen Verschiebung hinter Prellkanten arretiert werden. Das Rohrstück selbst dient zum Anhängen von Waren, oder es wird daran ein Warenträger gehaltert. Auch kann ein Warenträger auf den Rohrstücken mehrerer benachbarter Trägerstangen aufsitzen bzw. kann mehrere Rohrstücke mittels Querstangen verbinden. Hierzu werden systematisch verteilte Steckaufnahmen angebracht. Diese Tragstangenanordnung hat sich sehr gut gewährt. Sie ist jedoch vorrangig für quadratisch konfigurierte Steckaufnahmen konzipiert und verlangt zuvorderst an der Trägerstange eine Steckplatte. Das Konstruktionsprinzip bedingt eine gewisse Mindestgrösse der Bauteile und man benötigt durch das Verkanten der Trägerstange beim Ein- bzw. Ausklinken eine gewisse Bewegungsfreiheit.

Eine weitere bewährte Tragstangenanordnung wird in der WO 97/26809 vorgeschlagen. Diese Anordnung besteht ebenfalls aus einer Steckaufnahme in die mit wenigen Handgriffen eine Trägerstange einsteckbar ist. Auch der Typ von Steckaufnahmen, vornehmlich runder Gestalt, ist direkt in eine Rückwand oder in ein Paneel einzusetzbar. Möglich ist auch das rückseitige Anbringen am Paneel oder Ein- bzw. Aufsetzen auf ein Regalbauelement. Die rohrstückförmige Trägerstange besitzt eine in ihrem Steckende angeordnete Rastmechanik mit einem betätigbaren Hebelelement, das eine bewegliche Rastklinke aufweist. Diese Rastklinke krallt sich im zusammengesteckten Zustand zur Arretierung in eine in der Steckaufnahme vorgesehene Eingriffskontur ein. Hier wird keine Steckplatte zuvorderst an der Trägerstange benötigt. Die Steckaufnahme hat eine relativ einfache Innenkontur und kann daher kostengünstig hergestellt werden. Allerdings erhöht die im Steckende angeordnete Rastmechanik den konstruktiven Aufwand und bedingt entsprechenden Hohlraum im Steckende, so dass die Bauteile eine gewisse Dimension aufweisen müssen.

### Aufgabe der Erfindung

Resümierend ist festzustellen, dass die bishere Palette der bekannten Tragstangenanordnungen - bestehend aus einer Steckaufnahme und einer Trägerstange mit einer am Steckende sitzenden Steckplatte oder einer internen Rastmechanik - noch nicht alle differenzierten Anforderungen erfüllen. Der Erfindung liegt daher das Problem zugrunde, eine andersartige Tragstangenanordnung vorzuschlagen, deren Trägerstange am Steckende weder eine Steckplatte noch eine interne Rastmechanik benötigt, sondern allein durch die Formgebung am Steckende zuverlässig in der komplementären Steckhülse zeitweilig fixiert, aber auch unproblematisch wieder entfernbar ist, so dass man mit nur wenigen Handgriffen ein Feld mit zahlreichen Steckhülsen umgestalten kann. Insbesondere wird darauf abgezielt, auch kleinere Dimensionen der Bauteile zu ermöglichen.

Die zugehörige Steckhülse muss sich wiederum einfach an einer Rückwand, einem Paneel oder an einem Regalbauelement montieren lassen. Die Innenkonfiguration der Steckhülse zur Fixierung der eingesteckten Trägerstange soll eine einfache Gestalt haben und sich damit nicht kostenintensiv auswirken oder die Tragstangenanordnung störanfällig machen. Dennoch müssen die Trägerstangen sicher in den Steckaufnahmen sitzen und ohne grossen Montageaufwand in einer Zeilenanordnung exakt ausgerichtet erscheinen. Mehrere Trägerstangen sollen sich kombinieren oder mit Warenablagen, wie Tablaren bzw. offenen Kästen, versehen lassen.

### Übersicht über die Erfindung

Die Tragstangenanordnung besteht aus einer von einer Tragstruktur in einem Durchbruch aufgenommenen Steckhülse und einer in diese einsteckbaren Trägerstange. Die Steckhülse hat eine kapselartige Form und kann in einer Wand, in einem Paneel oder in einem Regalbauelement fixiert werden. Am Steckende der Trägerstange ist eine Hakenkontur vorgesehen, welche in der Steckhülse zum Fixieren dient.

In einer ersten Ausführung ist in der Steckhülse, in der Einstecköffnung ein freischnittener Absatz angeordnet, der nach dem Einstecken der Trägerstange von der Hakenkontur hintergriffen wird. Beim Einstecken der Trägerstange muss man diese zunächst anwinkeln, um mit der Hakenkontur hinter den Absatz zu gelangen, worauf die Trägerstange in die Horizontale abgesenkt werden kann und die Hakenkontur den Absatz maximal hintergreift.

In einer zweiten Ausführung ist in der Steckhülse ein in die Einstecköffnung hineinragendes Federelement angeordnet, welches beim Einschieben der Trägerstange in die Hakenkontur einrastet. Vorzugsweise besitzt die Steckhülse vorn einen Ausetzflansch, während nach hinten eine Gewindepartie vorhanden ist. Die Steckhülse wird zumeist in eine Bohrung in einem Paneel eingesetzt, so dass sich der Ausetzflansch auf der Panellvorderseite am Rand der Bohrung abstützen kann. Auf der Paneelrückseite wird die durchragende Gewindepartie mit einer Kontermutter verschraubt.

In beiden Ausführungsvarianten ist es vorteilhaft, die Einstecköffnung in der Steckhülse mit einem minimen Anstieg gegenüber der Horizontalen vorzusehen, so dass die eingesteckten Trägerstangen mit leichter Neigung in den Steckhülsen stecken und auf jeden Fall der negative optische Eindruck vermieden wird, die Trägerstangen würden schief nach unten hängen.

Dank der Erfindung steht nun ein weiterer Typ von Tragstangenanordnungen zur Verfügung, wo die Trägerstange ein sehr einfach gestaltetes Steckende aufweist und dennoch zuverlässig in der Steckhülse fixiert ist, aber auch mit wenigen Handgriffen umgesteckt werden kann. Die geschaffene Rastverbindung zwischen der eingesteckten Trägerstange und der Steckhülse erlaubt nun die Herstellung der Bauteile in verkleinerten Dimensionen, was für bestimmte Anwendungsfälle gestalterisch von Vorteil ist. Durch die Konstruktion entfällt ein mühsames Justieren einzelner Steckaufnahmen innerhalb einer Vielzahl. Bei ordnungsgemässer Montage und Fertigung sind die eingesetzten Trägerstangen von sich aus exakt ausgerichtet und vermitteln auch daher ein solides Erscheinungsbild auf der Präsentationswand, innerhalb des Regals oder an der betreffenden Einrichtung.

### Kurzbeschreibung der beigefügten Zeichnungen

- Figur 1:: eine zusammengesteckte Tragstangenanordnung mit dem Steckende der Trägerstange, der Steckhülse und der aufgeschraubten Mutter sowie mit einem freigeschnittenen Absatz in der Einstecköffnung der Steckhülse gemäss dem ersten Ausführungsbeispiel;
- Figur 2A:: die Steckhülse gemäss Figur 1 im Teilschnitt;
- Figur 2B:: das Steckende der Trägerstange gemäss Figur 1;
- Figur 3A:: die Steckhülse mit eingeführter Trägerstange gemäss Figur 1 im Teilschnitt;
- Figur 3B:: die Tragstangenanordnung gemäss Figur 1 in einem Paneel im Teilschnitt;
- Figur 4A:: eine Tragstangenanordnung mit dem Steckende der Trägerstange, der Steckhülse, dem Federelement und der Mutter in Explosivdarstellung gemäss dem zweiten Ausführungsbeispiel;
- Figur 4B:: die Tragstangenanordnung gemäss Figur 1 in geänderter Perspektive;
- Figur 5A:: die Steckhülse gemäss Figur 4A im Teilschnitt;
- Figur 5B:: die Steckhülse gemäss Figur 4A mit eingesetztem Federelement im Teilschnitt;
- Figur 6:: die Steckhülse mit aufgeschraubter Mutter gemäss Figur 4A;
- Figur 7:: die zusammengesteckte Tragstangenanordnung mit dem Steckende der Trägerstange, der Steckhülse und dem eingesetzten Federelement gemäss Figur 4A im Teilschnitt;
- Figur 8A:: die Darstellung gemäss Figur 7 mit aufgeschraubter Mutter; und
- Figur 8B:: die Tragstangenanordnung gemäss Figur 4A in einem Paneel im Teilschnitt.

### Ausführungsbeispiele

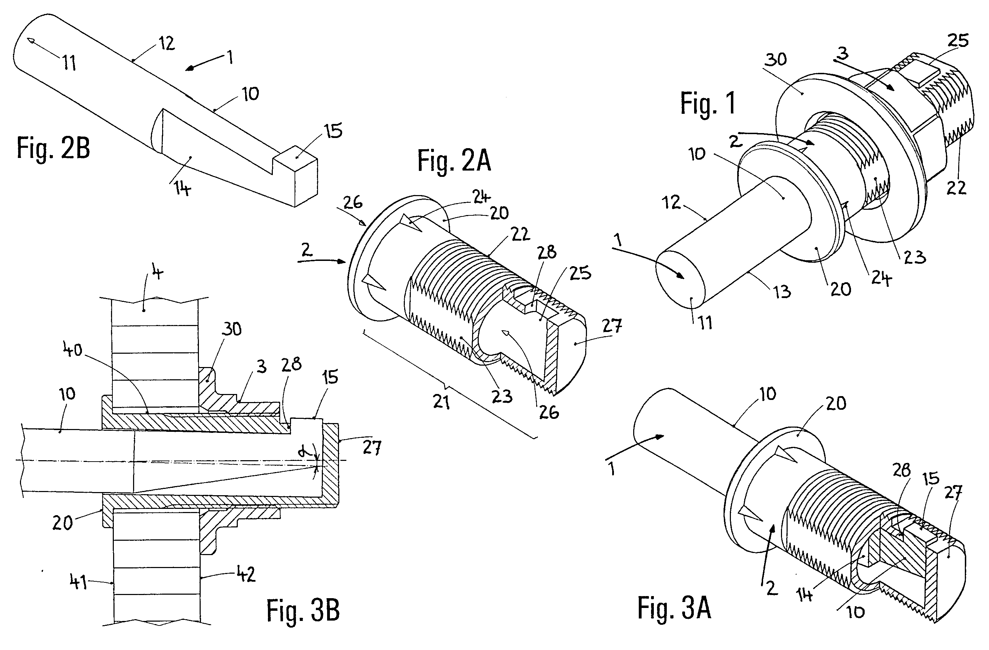

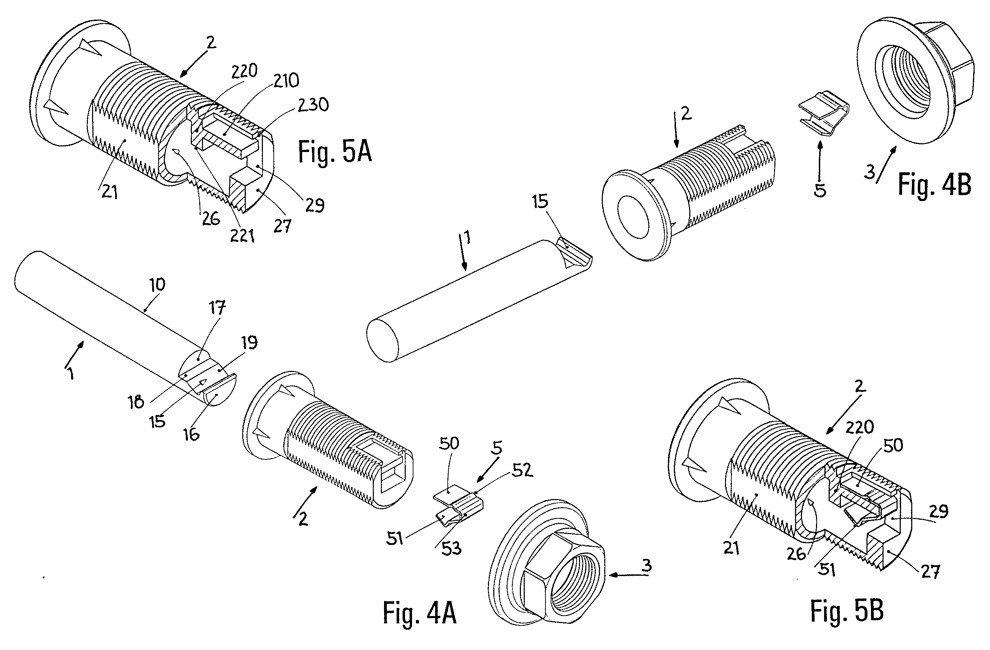

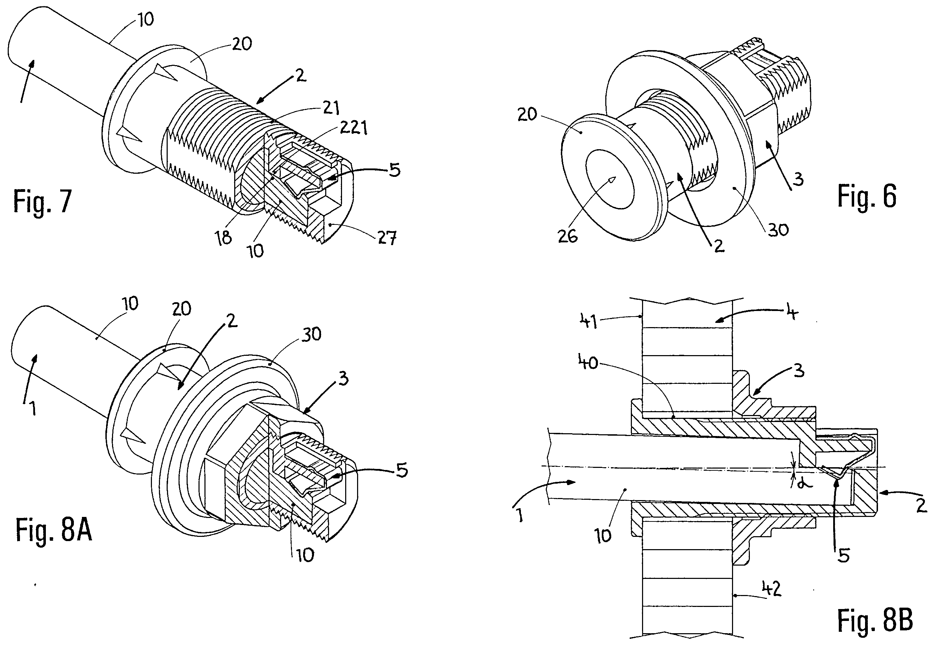

Nachstehend erfolgt die detaillierte Beschreibung eines Ausführungsbeispiels der erfindungsgemässen Tragstangenanordnung. Die Figurenfolge Figur 1 bis Figur 3B betrifft ein erstes Ausführungsbeispiel, während die Figuren 4A bis 8B ein zweites Ausführungsbeispiel darstellen. Nach den beiden Ausführungsbeispielen werden mögliche Modifikationen erwähnt.

### Figur 1

Zur Tragstangenanordnung gehört zunächst eine Trägerstange **1**, hier aus Rundmaterial. Die Trägerstange **1** weist einerseits ein Steckende **10** und diesem gegenüberliegend ein Stangenende **11** auf. Ferner werden an der Tragerstange **1** die Stangenoberseite **12** und die Stangenunterseite **13** definiert. Das Steckende **10** ist zum Einstecken in die Steckhülse **2** bestimmt. Das Stangenende **11** kann langestreckt, gebogen oder abgewinkelt zum unmittelbaren Anhängen von Sachen ausgebildet sein. Das Stangenende **11** kann auch eine Warenablage tragen oder im Prinzip einstückig in eine Warenablage übergehen, z.B. eine Schuhstütze.

Die Steckhülse **2** besitzt an der Vorderseite einen Aufsetzflansch **20**, hinter dem sich der Hülsenteil **21** anschliesst, welcher ein Aussengewinde **22** und zwei parallele Abflachungen **23** besitzt. Am Übergang vom Aufsetzflansch **20** zum Hülsenteil **21** sind radiale Sicherungsnocken **24** vorhanden. Nahe dem hinteren, freien Ende des Hülsenteils **21** existiert ein Durchbruch **25** eines intern freigeschnittenen Absatzes. Durch den Durchbruch **25** ragt das obere Ende der Hakenkontur der eingesteckten Trägerstange.

Die Sicherungsnocken **24** dienen der Rotationssicherung der, z.B. in eine Durchgangsbohrung in einem Holzpaneel eingesetzten Steckhülse **2**. Die Abflachungen **23** ermöglichen bei der Montage einen Steckschlüssel anzusetzen, wenn die aufgeschraubt gezeigte Mutter **3** gegen die Paneelrückwand festgezogen wird. Parallel zum Aufsetzflansch 20 an der Steckhülse **2** hat die Mutter **3** einen dem Aufsetzflansch **20** zugewandten Gegenflansch **30**, der zum Aufsetzen auf die Paneelrückwand bestimmt ist.

### Figur 2A

Intern besitzt die Steckhülse **2** ein Sackloch **26**, welches der Aufnahme des Steckendes **10** der Trägerstange **1** dient. Zur Begrenzung der Einstecktiefe weist die Steckhülse **2** den Hülsenboden **27** auf, gegen den eine eingesteckte Trägerstange **1** anstösst. An der Oberseite des Hülsenteils **21**, nahe dem Hülsenboden **27**, befindet sich der Durchbruch **25**, so dass ein zum Aufsetzflansch **20** hin orientierter Absatz **28** entsteht. Im Verlauf des Sacklochs **26**, vorzugsweise an den Hülsenboden **27** angrenzend, ist ein nicht-rotationssymmetrischer Abschnitt vorhanden, um die eingesteckte Trägerstange **1** zusätzlich gegen Verdrehen zu sichern.

### Figuren 2B und 3A

Das Steckende **10** der Trägerstange **1**, die hier aus Rundmaterial besteht, besitzt zwei seitliche Abflachungen **14** und abschliessend eine Hakenkontur **15** in Form einer zur Stangenoberseite **12** und diese eventuelle überragenden, aufgerichteten Nase. Ist das Steckende **10** in das Sackloch **26** der Steckhülse **2** vollständig eingesteckt, so durchragt die Hakenkontur **15** den Durchbruch und hintergreift dabei den Absatz **28**. Die Abflachungen **14** stecken innerhalb eines komplementären Abschnitts im Sackloch **26**. Somit ist die Trägerstange **1** jetzt sowohl gegen axiales Herausziehen als auch gegen Verdrehen gesichert.

Um das Steckende **10** der Trägerstange **1** in das Sackloch **26** der Steckhülse **2** einzuführen, muss man die Trägerstange **1** zur Horizontalen geneigt halten, so dass das Stangenende **11** angehoben ist. In solcher Position lässt sich die Hakenkontur **15** hinter den Absatz **28** führen; hierfür gibt es Freiraum im Sackloch **26**. Anschliessend wird die Trägerstange **1** in horizontale Lage angeschwenkt, wodurch die Hakenkontur **15** aufsteigt und den Absatz **28** nun maximal hintergreift. Das Entfernen einer in der Steckhülse **2** befindenden Trägerstange **1** geschieht in rückwärtiger Verfahrensweise.

### Figur 3B

Zum Einsetzen einer Steckhülse **2** in ein Paneel **4** muss zuvor ein Durchbruch **40** im Paneel **4** erzeugt werden. Die in den Durchbruch **40** eingesetzte Steckhülse **2** sitzt mit ihrem Aufsetzflansch **20** an der Frontseite **41** des Paneels **4** auf. Von der Paneelrückseite **42** wird die Mutter **3** auf das Aussengewinde **22** am Hülsenteil **21** aufgeschraubt, welches den Durchbruch **40** durchragt, so dass der Gegenflansch **30** auf der Paneelrückseite **42** aufliegt. Um der eingesteckten Trägerstange **1** eine optisch vorteilhafte Ausrichtung zu geben, besitzt das axiale Sackloch **26** in der Steckhülse **2** vom Hülsenboden **27** hin zum Aufsetzflansch einen leichten Anstieg im Winkel α > 0°. Die nach oben weisende Hakenkontur **15** an der Trägerstange **1** sowie der obenliegende Absatz **25** in der Steckhülse **2** sind Hilfen für die positionsgerechte Montage und geben eine eindeutige Orientierung beim Einstecken der Trägerstange **1**.

### Figuren 4A, 4B und 6

Bei diesem zweiten Ausführungsbeispiel der Tragstangenanordnung sind ebenfalls die Trägerstange **1**, die Steckhülse **2** und die Mutter **3** vorhanden. Unterschiede bestehen in der Fixierung der eingesteckten Trägerstange **1** in der Steckhülse **2**. Die Hakenkontur **15** am Steckende **10** der Trägerstange **1** ist anders ausgebildet. Ferner hintergreift hier nicht die Hakenkontur **15** einen Absatz **28** am Hülsenteil **21**, sondern es ist ein zusätzliches Federelement **5** vorgesehen, welches an der Steckhülse **2** angebracht wird und zum Eingriff in die Hakenkontur **15** bestimmt ist.

Erhebt sich im ersten Ausführungsbeispiel die Hakenkontur **15** der Trägerstange **1** zumindest bis an die Stangenoberseite **12** oder überragt diese, so ist die hiesige Hakenkontur **15** durch Materialaussparung entstanden. Am äusseren Steckende **10** ist über einen Rastabschnitt zwischen der Stirnfläche **16** und einem vertikalen Anschlag **17**, von der Stangenoberseite **12** her, das Material etwa bis zur halben Stangendicke auf einen Sims **18** ausgespart. Nahe der Stirnfläche **16** ist von diesem Sims **18** eine V-förmige, querverlaufende Einkerbung **19** vorgesehen, deren Grund zur Stangenunterseite **13** orientiert ist. Diese Einkerbung **19** bildet die Hakenkontur **15**, welche zur Stirnfläche **16** steiler ausgebildet ist, als zum Anschlag **17**. Der kantenförmige Übergang von der Stirnfläche **16** zur Einkerbung **19** ist abgerundet.

Die so geometrisch geformte Hakenkontur **15** lässt sich spritztechnisch in Kunststoff und durch Metallbearbeitung vorteilhaft herstellen. Bei diesem Ausführungsbeispiel erübrigen sich auch die seitlichen Abflachungen **14** am Steckende **10** und die dazu komplementäre Form im Sackloch **26** der Steckhülse **2**.

Das Federelement **5** ist eine im Prinzip U-förmig gebogene Blattfeder mit einem horizontal erstreckenden Flachteil **50** am oberen Ende und einem V-profilierten unterem Ende **51**. Das Flachteil **50** geht mit einem Querbuckel **52** in das Bogenteil **53** über.

### Figuren 5A und 5B

Im oberen Bereich des Hülsenbodens **27** ist ein Durchbruch **29**, auf den axial ein Zungenteil **210** weist, welches sich aus dem Innern des Hülsenteils **21** erstreckt und dort an einen zum Hülsenboden **27** parallelen, halbkreisförmigen Innenanschlag **220** ansetzt. Der Innenanschlag **220** endet unten mit einer horizontalen Schulter **221**. Über dem Zungenteil **210** ist das Hülsenteil **21** ausgespart, wobei jedoch beidseits des Zungenteils **210** über diesem axiale, zueinander parallele Nuten **230** verbleiben.

Die Nuten **230** sind zur Aufnahme der Seitenflanken des Flachteils **50** des eingeschobenen Federelements **5** vorgesehen, wobei der Querbuckel **52** eine Verklemmung in den Nuten **230** bewirkt. Das Bogenteil **53** des Federelements **5** windet sich um das Zungenteil **210**, so dass das untere V-profilierte Ende **51** des Federelements **5** durch den Durchbruch **29** in das Sackloch **26** hineinragt.

### Figur 7

Ist die Trägerstange **1** mit dem Steckende **10** in das Sackloch **26** der Steckhülse **2** maximal eingeschoben, so stossen die Stirnfläche **16** und/oder der Anschlag **17** gegen die Innenseite des Hülsenbodens **27** bzw. gegen den Innenanschlag **220** in der Steckhülse **2**. Beim Einführen des Steckendes **10** schiebt sich die Hakenkontur **15** am unteren V-förmig profilierten Ende **51** des Federelements **5** vorbei, bis dieses in die tiefer liegende Einkerbung **19** einrastet. Damit ist die Tragerstange **1** in der Steckhülse **2** gegen unbeabsichtigtes Herausziehen und gegen Verdrehen gesichert. Will man die Trägerstange **1** wieder entfernen, muss mit solcher Kraft an der Trägerstange **1** gezogen werden, das die Spannung des Federelements **5** überwunden wird, d.h. sich dessen Ende **51** hochbiegt und die Hakenkontur **15** überspringt.

Die Verdrehsicherung der in die Steckhülse **2** eingesteckten Trägerstange **2** ist nun durch den horizontalen, querverlaufenden Sims **18** und die Schulter **221** gewährleistet, die miteinander zur Anlage kommen.

### Figuren 8A und 8B

Wie im ersten Ausführungsbeispiel kann auch hier die Mutter **3** auf das Aussengewinde **22** am Hülsenteil **21** der Steckhülse **2** aufgeschraubt werden, um eine in einem Durchbruch **40** im Paneel **4** eingesetzte Steckhülse **2** zu sichern. Der Aufsetzflansch **20** der Steckhülse **2** liegt auf der Frontseite **41** des Paneels **4** auf, während sich der Gegenflansch **30** der Mutter **3** auf die Paneelrückseite **42** drückt. Auch hier kann man das axiale Sackloch **26** in der Steckhülse **2** vom Hülsenboden **27** hin zum Aufsetzflansch mit einem leichten Anstieg α > 0° vorsehen.

Ausdrücklich erwähnt seien noch folgende Abwandlungsmöglichkeiten der bisher beschriebenen Tragstangenanordnung:
- Gestalterisch effektvoll lassen sich die Steckhülsen **2** auf einem Paneel **4** über ein Feld verteilen, die dann unterschiedlich bestückt werden können, wobei auch Trägerstangen **1** einsetzbar sind, die zwei und mehrere Steckhülsen **2** überbrücken und dort mit ihren Steckenden **10** einzusetzen sind.
- In der Steckhülse **2** muss nicht der Durchbruch **25** vorhanden sein, entscheidend ist das Vorhandensein eines internen Absatzes **28** hinter den die Hakenkontur **15** gelangen kann. Dies ist auch durch eine innere Kavität im Mantel des Hülsenteils **21** möglich. Und das Federelement **5** könnte auch innerlich eingesetzt werden.
- Die Trägerstange **1** kann aus Metall oder Kunststoff gefertigt sein, je nach gewünschter Optik und Belastungswerten. Die Steckhülse **2** wird man vorzugsweise als metallisches Gussteil herstellen.
- Die Trägerstange **1** muss nicht aus Rundmaterial sein, auch kantiges Stangenmaterial ist einsetzbar. Als Tragstruktur, in die die Steckhülse **2** einsetzbar ist, kommen auch Regalbauelemente, Rohrkonstruktionen oder Rahmenteile in Betracht.
- Anstatt die Steckhülse **2** zu verschrauben, könnte diese in den vorbereiten Durchbruch **40** mit der vorgesehenen Einsetztiefe auch eingeklebt werden.
- Beim Einsetzen der Steckhülsen **2** in Glaswände ist es ratsam, den Aufsetzflansch **20** und den Gegenflansch **30** zu vergrössern.

## Patentansprüche

1. Tragstangenanordnung für Handels- und Dienstleistungseinrichtungen zum direkten oder indirekten Anhängen von zu präsentierenden Dingen mit einer von einer Wand (**4**) oder einer anderen Tragstruktur aufgenommenen Steckhülse (**2**) und in diese einsteckbaren Trägerstange (**1**), wobei
a) die Steckhülse (**2**) in einem Durchbruch (**40**) in der Wand (**4**) oder dem Regalbauelement fixierbar ist;
b) die Trägerstange (**1**) ein Steckende (**10**) besitzt, welches dazu bestimmt ist, in eine axiale Eintrittsöffnung (**26**) der Steckhülse (**2**) eingesetzt zu werden, dadurch gekennzeichnet,
c) am Steckende (**10**) eine Hakenkontur (**15**) vorgesehen ist; und
d) die Arretierung der eingesteckten Trägerstange (**1**) bewirkt ist entweder durch
e) einen in der Steckhülse (**2**) vorhandenen freigeschnittenen Absatz (**28**), der von der Hakenkontur (**15**) hintergriffen wird, nachdem die Trägerstange (**1**) beim Einschieben in Eintrittsöffnung (**26**) zunächst verkantet und anschliessend ausgerichtet wurde; oder durch
f) Einrasten eines in der Steckhülse (**2**) angeordneten Federelements (**5**) in die Hakenkontur (**15**).

2. Tragstangenanordnung nach Anspruch 1, dadurch gekennzeichnet, dass
a) die Hakenkontur (**15**) eine am freien Ende des Steckendes (**10**) gelegene aufwärts ragende Nase ist, welche sich zumindest bis zur Ebene der Stangenoberseite (**12**) erhebt oder diese überragt; und
b) nahe dem hinten an der Steckhülse (**2**) abschliessenden Hülsenboden (**27**) ein zur Nase komplementärer Durchbruch (**25**) vorgesehen ist, im dem sich der Absatz (**28**) befindet, wobei die Nase in den Durchbruch (**25**) eingreift und sich am Absatz (**28**) abstützt, sobald die Trägerstange (**1**) in ihrer ausgerichteten Endstellung steht.

3. Tragstangenanordnung nach Anspruch 2, dadurch gekennzeichnet, dass am Steckende (**10**) seitliche Abflachungen (**14**) vorhanden sind, zu denen in der Eintrittsöffnung (**26**) eine komplementäre Verengung vorgesehen ist, um die eingesteckte Trägerstange (**1**) gegen Verdrehen zu sichern.

4. Tragstangenanordnung nach Anspruch 1, dadurch gekennzeichnet, dass die am Steckende (**1**) vorhandene Hakenkontur (**15**) wie folgt beschaffen ist:
a) am äusseren Steckende (**10**) ist beginnend an der Stirnfläche **16** über einen Längenabschnitt, von der Stangenoberseite **12** her, Material etwa bis zur halben Stangendicke, bis auf das Niveau eines Simses (**18**) ausgespart;
b) nahe der Stirnfläche (**16**) ist von diesem Sims (**18**) aus eine V-förmige, querverlaufende Einkerbung (**19**) vorgesehen, deren Grund zur Stangenunterseite (**13**) orientiert ist; und
c) der kantenförmige Übergang von der Stirnfläche (**16**) zur Einkerbung (**19**) abgerundet ist.

5. Tragstangenanordnung nach Anspruch 4, dadurch gekennzeichnet, dass die Einkerbung (**19**) die Hakenkontur (**15**) bildet, welche zur Stirnfläche (**16**) steiler ausgebildet ist als in Gegenrichtung, wo die Materialaussparung in einer Anschlagfläche (**17**) endet.

6. Tragstangenanordnung nach Anspruch 1, dadurch gekennzeichnet, dass das Federelement (**5**) die Gestalt einer Blattfeder hat und am hinteren Ende in die Steckhülse (**2**) eingesetzt ist, wobei
a) ein Federteil (**51**) in die Eintrittsöffnung (**26**) hineinragt, welches dazu bestimmt ist, in die Hakenkontur (**15**) einer eingesteckten Trägerstange (**1**) einzurasten; und
b) das Federteil (**51**) zumindest nahezu ebenso breit ist, wie die Hakenkontur (**15**).

7. Tragstangenanordnung nach Anspruch 6, dadurch gekennzeichnet, dass
a) die Steckhülse (**2**) hinten mit einem Hülsenboden (**27**) abschliesst, in dem im oberen Bereich ein Durchbruch (**29**) vorhanden ist;
b) auf den Durchbruch (**29**) ein aus dem Inneren der Steckhülse (**2**) kommendes Zungenteil (**210**) gerichtet ist;
c) das Zungenteil (**210**) in einen halbkreisförmigen Innenanschlag (**220**) übergeht, der unten mit einer horizontalen Schulter (**221**) endet;
d) die Schulter (**221**) im zusammengesteckten Zustand mit dem darunter befindenden Sims (**18**) zur Anlage kommt, wodurch die Verdrehsicherung der Trägerstange (**1**) gewährleistet ist; und
e) das Federelement (**5**) auf dem Zungenteil (**210**) aufgesteckt ist und sich zusätzlich in seitlichen Nuten (**230**) im Hülsenteil (**21**) der Steckhülse (**2**) abstützen kann.

8. Tragstangenanordnung nach Anspruch 1, dadurch gekennzeichnet, dass
a) die Steckhülse (**2**) vorn einen die Eintrittsöffnung (**26**) umgebenden Aufsetzflansch (**20**) besitzt, an den sich ein Hülsenteil (**21**) anschliesst, welches mit Aussengewinde (**22**) und zwei zueinander parallelen, abgeflachten Schlüsselflächen (**23**) versehen ist; und
b) auf das Aussengewinde (**22**) eine Mutter (**3**) aufschraubbar ist, um die in den Wandurchbruch (**40**) eingesetzte Steckhülse (**2**) zu fixieren.

9. Tragstangenanordnung nach Anspruch 1, dadurch gekennzeichnet, dass die Eintrittsöffnung (**26**) im Verhältnis zur horizontalen Achse, nach vorn hin, aufsteigend unter dem Winkel (α) > 0° verläuft.

10. Tragstangenanordnung nach Anspruch 8, dadurch gekennzeichnet, dass
a) hinter dem Aufsetzflansch (**20**) erhabene Sicherungsnocken (**24**) vorhanden sind, die sich auf das Hülsenteil (**21**) zu erstrecken; und
b) an der Mutter (**3**) ein dem Aufsetzflansch (**20**) zugewandter Gegenflansch (**30**) vorhanden ist.
